# EUROPÄISCHE PATENTSCHRIFT

(11) **EP 1 337 762 B1**
(45) Veröffentlichungstag und Bekanntmachung des Hinweises auf die Patenterteilung: **20.09.2006**
(21) Anmeldenummer: 01984779.7
(22) Anmeldetag: 28.11.2001
(51) Int. Cl.: F16C 29/00, F16D 3/205

(54) **VERSCHIEBEGELENK**
PRISMATIC JOINT
JOINT COULISSANT

(30) Priorität: 02.12.2000 DE 10059999; 02.12.2000 DE 10060001; 02.12.2000 DE 10059962
(43) Veröffentlichungstag der Anmeldung: 27.08.2003
(73) Patentinhaber: Schaeffler KG, 91074 Herzogenaurach (DE)
(72) Erfinder: OLSZEWSKI, Piotr, F-67500 Haguenau (FR); TISCH, Siegfried, 70839 Gerlingen (DE); KRUPPA, Martin, 91074 Herzogenaurach (DE); FUGEL, Wolfgang, 90453 Nürnberg (DE)
(86) Internationale Anmeldenummer: PCT/EP2001/013908
(87) Internationale Veröffentlichungsnummer: WO 2002/044573

(56) Entgegenhaltungen:
- DE-A- 3 544 919
- DE-A- 4 110 311
- US-A- 4 408 806
- US-A- 4 684 356
- US-A- 5 160 298
- PATENT ABSTRACTS OF JAPAN vol. 012, no. 260 (M-720), 21. Juli 1988 (1988-07-21) & JP 63 043028 A (HONDA MOTOR CO LTD), 24. Februar 1988 (1988-02-24)

## Beschreibung

### Gebiet der Erfindung

Die vorliegende Erfindung betrifft ein Verschiebegelenk für ein Gleichlaufdrehgelenk, das in Antriebswellen von Fahrzeugen eingesetzt ist. Die Erfindung bezieht sich insbesondere auf die Ausgestaltung der in dem Gleichlaufdrehgelenk eingesetzten Wälzlagerelemente. Das Gleichlaufdrehgelenk ist in einem vorzugsweise glockenförmig ausgestalteten Gelenkaußenteil angeordnet und umfasst eine drehfest an einer Antriebswelle verbundene Tripode, deren Tripodestern symmetrisch verteilt angeordnete Zapfen aufweist. Jeder Zapfen ist mit Wälzlagerelementen versehen, über die das Gelenk in Ausnehmungen des Gelenkaußenteils verschiebbar geführt ist. Jedes Wälzlagerelement umfasst eine Lagerschale, die an dem kugelig gestalteten Zapfen des Tripodesterns abgestützt ist.

Bei diesem Gleichlaufdrehgelenk werden die Bauteile innerhalb des Gleichlaufgelenks, die dafür verantwortlich sind, die Winkelbewegungen und die Translationsbewegung des Gelenks auszuführen, voneinander getrennt. Damit verbunden wird bei einer Übergangsbewegung,- die bei einem Betrieb der Antriebswelle unter einem Beugewinkel auftritt,- die Gleitreibung durch eine Wälzreibung oder eine Rollreibung ersetzt. Gleichzeitig reduziert sich die zur Verschiebung des Gelenks erforderliche Axialkraft.

### Hintergrund der Erfindung

Die DE 34 40 105 C2 zeigt ein Gleichlaufdrehgelenk, bei dem das Wälzlagerelement eine Lagerschale umfasst, welche mit einer Kugelpfanne formschlüssig an dem kugelig gestalteten Zapfen des Tripodesterns abgestützt ist. Die als Nadeln gestalteten Wälzkörper sind zwischen der Lagerschale und einer im Gelenkaußenteil angeordneten Laufbahn eingesetzt. Dabei sind die berührend aneinander angeordneten Wälzkörper in einem Käfig eingesetzt, der längsseitig halbrundartig geformte Borde aufweist, in die stimseitig konisch angeformte Ansätze der Wälzkörper eingreifen. Das bekannte Schiebegelenk verfügt weiterhin über eine Positioniereinrichtung, ausgebildet als eine parallel zur Ebene der Wälzkörper angeordnete H-Nadelfeder, die jeweils zwischen der Lagerschale und einem stirnseitigen Ende des Wälzlagerkäfigs angeordnet ist, zur Beaufschlagung des Käfigs und damit der Wälzkörper in eine Mittenposition gegenüber der Lagerschale. Diese Einrichtung soll dazu dienen, dass sich die Lagerschale unabhängig vom Beugewinkel der Antriebswelle über die gesamte Breite an Wälzkörpern abgestützt ist, wodurch sich eine nahezu konstante Traglast bzw. Flächenpressung zwischen diesen Bauteilen einstellt. Die jeweils konisch gestalteten Stirnseiten der Wälzkörper verursachen erhöhte Herstellkosten sowie eine aufwendige Montage. Weiterhin verursachen die als Wälznadeln ausgebildeten, aneinander berührend angeordneten Wälzkörper in dem Käfig, aufgrund der vollnadeligen Anordnung, eine erhöhte Reibung, verbunden mit einer erhöhten Axialkraft, die sich ebenfalls nachteilig auf die Geräuschentwicklung auswirkt.

Aus der DE-A-3 544 919 ist ein Verschiebegelenk gemäß Oberbegriff des Anspruchs 1 bzw. Anspruchs 2 bekannt.

### Aufgabe der Erfindung

Von den Nachteilen der bekannten Lösung ausgehend, ist es Aufgabe der vorliegenden Erfindung, ein Verschiebegelenk zu realisieren mit einer optimalen Abstützung der Lagerschale an den Wälzkörpern, die eine vereinfachte Montage sowie die Verwendung von herkömmlichen Wälzkörpern ermöglicht.

### Zusammenfassung der Erfindung

Die zuvor genannte Problemstellung wird erfindungsgemäß gelöst durch die Merkmale in den Ansprüchen 1 und 2.

Gemäß Anspruch 1 ist ein Verschiebegelenk vorgesehen, bei dem jedes der zwei einem Zapfen zugeordneten Wälzlagerelemente eine Lagerschale aufweist, die an dem Zapfen des Tripodesterns geführt, jedoch nicht lagefixiert ist. Die Wälzkörper des Wälzlagerelementes sind dabei verliergesichert, spielbehaftet in einem Käfig eingesetzt, der an Wandungen der Ausnehmungen in dem Gelenkaußenteil geführt ist. Eine weitere Funktion des Käfigs besteht darin, dass dieser weiterhin eine Seitenführung für die Lagerschale bildet. Der erfindungsgemäße Aufbau begrenzt damit die Bewegung der Lagerschale ausschließlich auf eine in Richtung der Ausnehmungen verlaufende Längsbewegung. Das erfindungsgemäße Verschiebegelenk besitzt im Vergleich zu einer Tripoderolleneinheit ein geringeres Umschlagsspiel, d.h. ein Lastwechselschlag beim Wechsel von Zug und Schub oder umgekehrt unterbleibt. Weiterhin zeichnet sich das Verschiebegelenk gemäß der Erfindung aus durch ein reduziertes NVH (noise vibration harshness) sowie durch eine verbesserte Agilität.

Bei einem Beugewinkel der Antriebswelle verlagert sich folglich der Zapfen des Tripodesterns innerhalb der Lagerschale, d. h. in Richtung einer Längsachse der Wälzkörper. Diese Bewegung des Zapfens kann synchron zu einer Verschiebung der Wälzlagerelemente in den Ausnehmungen des Gelenkaußenteils erfolgen. Die erfindungsgemäße Gestaltung des Wälzlagerelementes gewährleistet eine gewünschte unveränderte, großflächige Abstützung der gesamten Lagerschale an den Wälzkörpern, was sich positiv auf das Reibverhalten und auch auf die Geräuschentwicklung auswirkt. Die Erfindung umfasst weiterhin eine Positioniereinrichtung, mit der eine Mittenposition der Wälzkörper gegenüber der Lagerschale erzielt werden kann. Diese Maßnahme bewirkt eine selbsttätige Ausrichtung des Wälzlagerelementes in der Betriebsstellung, d. h. auch bei umlaufender Antriebswelle, so dass stets eine ausreichende Abstützung der Lagerschale an den Wälzkörpern erzielt werden kann und gleichzeitig eine Endanlage der Lagerschale an dem Käfig vermieden wird.

Die Erfindung gemäß Anspruch 2 bezieht sich auf ein Verschiebegelenk, bei dem das Wälzlagerelement eine an dem kugelig gestalteten Zapfen des Tripodesterns geführte Lagerschale umfasst, die dazu eine der Formgebung des Zapfens angepasste, kalottenartig gestaltete Aufnahme aufweist. Der spanlos hergestellte Käfig des Wälzlagerelementes ist als Wannenform gestaltet und zur Aufnahme und Führung der Wälzkörper vorgesehen. An den Längswandungen des Käfigs ist die Lagerschale spielbehaftet geführt. Weiterhin bilden die Querwandungen des wannenförmig gestalteten Käfigs Positioniereinrichtungen, die auch bei einem nicht belasteten Verschiebegelenk eine kraftschlüssige Abstützung des Zapfens an der Lagerschale sicherstellt und eine spielbehaftete, Geräusche verursachende Lagerschalenanordnung vermeidet. Gleichzeitig gewährt die Positioniereinrichtung eine wirksame Verliersicherung für die Lagerschale.

Die kalottenartig gestaltete Aufnahme in der Lagerschale für den Zapfen des Tripodestem, bewirkt eine formschlüssige Anbindung des Wälzlagerelementes bzw. des Verschiebegelenkes an dem Tripodestern. Diese Anlenkung bewirkt eine stets mittige Krafteinleitung in die Lagerschale, welche sich auf die Wälzkörper fortsetzt, wodurch ein nachteiliger Kantentrag vermieden wird. Diese Anordnung wirkt sich vorteilhaft auf die Lebensdauer des Wälzlagerelementes auswirkt.

Weitere vorteilhafte Ausgestaltungen der Erfindung sind Gegenstand der abhängigen Ansprüche 3 bis 29.

Eine bevorzugte Ausgestaltung der Erfindung umfasst einen Käfig, der alle Bauteile des Wälzlagerelementes zu einer Baugruppe zusammenfasst. In den Käfig sind sowohl Wälzkörper verliergesichert spielbehaftet gehalten als auch die Lagerschalen seitlich geführt und außerdem schließt die vormontierbare Baugruppe die Positioniereinrichtung zwischen der Lagerschale und dem Käfig ein.

Das erfindungsgemäße Verschiebegelenk ist versehen mit einer Lagerschale, die eine weitestgehend halbrundartige, quer zum Stellweg an das Schiebegelenks verlaufende Aufnahme aufweist. Der Radius dieser Aufnahme ist angepasst an die kugelige Mantelfläche des mit dem Tripodestern verbunden Zapfens bzw. entspricht dessen Radius. Abweichend zu herkömmlich gestalteten Schiebegelenken ist damit die Lagerschale nicht formschlüssig an dem Zapfen abgestützt, sondern ermöglicht eine Relativbewegung des Zapfens zu der Lagerschale entlang der Aufnahme.

Als Maßnahme, die Herstellkosten zu senken, ist erfindungsgemäß der Käfig als Blechkörper gestaltet und spanlos insbesondere durch ein Tiefziehverfahren hergestellt. Dabei besitzt der Käfig eine weitestgehend u-förmig gestaltete Querschnittsform mit parallel zueinander verlaufenden Borden, an denen in verschiedenen Ebenen die Lagerschale und die Wälzkörper geführt sind. Zur Aufnahme der Wälzkörper ist der Käfig zwischen den Borden mit Aussparungen versehen, die jeweils durch einen Steg getrennt sind. Zur Erzielung einer verliergesicherten Anordnung der Wälzkörper in dem Käfig ist der axiale Abstand zwischen den Stegen geringer als der Durchmesser der Wälzkörper, so dass sich eine geringfügige Überdeckung einstellt, die einerseits aufgrund der Eigenelastizität des Käfigs eine Montage der Wälzkörper ermöglicht und andererseits eine verliergesicherte Anordnung der Wälzkörper sicherstellt.

Die Ausbildung des erfindungsgemäßen Käfigs umfasst weiterhin Stege, deren Mittenzone eine Kröpfung aufweisen. Die in Richtung der Lagerschale ausgerichtete Kröpfung erstreckt sich bis über die Wälzkörpermitte und bildet dabei einen Axialabstand zwischen den Stegen, der kleiner ist als der Durchmesser der Wälzkörper, wodurch eine sichere Befestigung der Wälzkörper in dem Käfig gewährleistet ist.

Gemäß einer weiteren Ausgestaltung der Erfindung ist der Käfig an beiden Stirnseiten mit Längsanschlägen versehen, die rechtwinklig bzw. quer zu den längsseitig verlaufenden Borden angeordnet sind. Dabei bilden diese Längsanschläge einen Endanschlag für die Lagerschale und zur Anordnung bzw. Befestigung der Positioniereinrichtung.

Die konstruktive Gestaltung der Lagerschale sieht eine ebene Kontaktfläche vor, über die sich die Lagerschale an den Wälzkörpern abstützt. Von der Kontaktfläche ausgehend verjüngt sich die Lagerschale in Richtung des Tripodestern-Zapfens allseitig und stützt sich an der von der Kontaktfläche abgewandten Seite mit einer halbrundartig gestalteten Aufnahme an dem kugelig, sphärisch ausgebildeten Zapfen des Tripodesterns ab. Die erfindungsgemäß gestaltete Lagerschale vereinfacht die Montage des Schiebegelenks auf den Zapfen des Tripodesterns.

Eine weitere Ausgestaltung der Erfindung sieht vor, das Verschiebegelenk mit einer Positioniereinheit zu versehen, deren Federmittel in beiden Stellrichtungen des Wälzlagerelementes wirkend, zwischen der Lagerschale und dem Käfig angeordnet sind. Dabei ist sowohl ein einteiliges oder auch ein mehrteiliges Federmittel verwendbar, das kraftschlüssig und/oder formschlüssig an der Lagerschale befestigt ist. Zur Abstützung des Federmittels bietet es sich an, die an Längsanschläge des Käfigs zu benutzen, das gilt sowohl für die Verwendung eines einteiligen Federmittels als auch für ein zwei Federn umfassendes Federmittel. Für ein einteiliges Federmittel kann weiterhin eine Mittenzone so ausgebildet werden, dass diese in einer Umlaufnut der Lagerschale eingreift und damit formschlüssig gehalten ist. Als Maßnahme zur Erzielung einer optimalen Führung ist vorgesehen, das Federmittel an zumindest einem Bord des Käfigs zu führen.

Weitere Ausgestaltungen der Positioniereinheit umfassen als Druckfedern oder als Zugfedern ausgebildete Federmittel. Dazu sind die vorzugsweise horizontal, parallel zu den Wälzkörpern eingesetzten Federmittel zur Erzielung einer optimalen Einbaulage, an zumindest einem der in Längsrichtung verlaufenden Borde des Käfigs seitlich geführt. Diese Maßnahme bewirkt eine sichere, spielfreie Einbaulage, die außerdem eine nachteilige Geräuschentwicklung wirksam unterbindet.

Die Erfindung erstreckt sich weiterhin auf die Herstellung der Lagerschale, die bevorzugt als ein Fließpressteil gestaltet ist. Eine derartige Lagerschale erfüllt alle Forderungen hinsichtlich der Festigkeit und ermöglicht darüber hinaus eine kostengünstige prozeßsichere Herstellung in großen Stückzahlen, unter Einhaltung geforderter Lage- und Fertigungstoleranzen.

Die formschlüssige Anbindung des Zapfens an der Lagerschale gemäß der Erfindung nach Anspruch 2 sieht vorteilhaft eine kreisringförmige Kontaktfläche zwischen dem Zapfen und der Lagerschale vor. Diese Maßnahme verbessert die Krafteinleitung und vermeidet eine Überbeanspruchung der in Wirkverbindung stehenden Bauteile. Die kreisringförmige Kontaktfläche wirkt sich ebenfalls positiv auf die Abstützhöhe auf, wenn sich die Lagerschale und damit das Wälzlagerelement bewegt, bedingt durch ein Alternieren der Anzahl der tragenden Wälzkörper und der Verformungsstöße der in die Lastzone einlaufenden Wälzkörper. Die periodisch sich ändernde Abstützhöhe nimmt Einfluss auf den Rundlauf des Tripodesterns und damit auf das Schwingungsverhalten der Antriebswelle, das den Verschleiß des Antriebsgelenks und gleichzeitig die Geräuschentwicklung beeinflusst. Die erfindungsgemäße kreisringförmige Kontaktfläche zwischen dem Zapfen und der Lagerschale eliminiert diesen Nachteil und verbessert folglich sowohl den Rundlauf und optimiert das Geräuschverhalten.

Eine weitere vorteilhafte Ausgestaltung der Erfindung sieht vor, dass die Laufbahn im Gelenkaußenteil für das Wälzlagerelement bzw. das Verschiebeelement außenseitig von einer Wandung begrenzt ist und innenseitig stufenlos gestaltet ist. Diese Maßnahme begünstigt ein ungehindertes freies Verlagern des Wälzlagerelementes, entsprechend der Stellbewegung des Zapfens.

Eine bevorzugte Ausgestaltung der Erfindung sieht vor, dass alle Bauteile des Wälzlagerelementes wie Käfig, Lagerschale, Wälzkörper sowie die Positioniereinrichtung zu einer Baugruppe zusammengefasst sind.

Der konstruktive Aufbau der erfindungsgemäßen Lagerschale sieht eine äußere ebene Kontaktfläche vor, an denen die Wälzkörper geführt sind. Von der quadratisch oder rechteckig gestalteten Kontaktfläche ausgehend, verjüngt sich die Lagerschale in Richtung des Tripodestern-Zapfens, zur Bildung eines Kegelstumpfs oder eines Pyramidenstumpfs.

Eine weitere Ausbildung der Erfindung bezieht sich auf den Käfig, in dem die Wälzlagerelementes verliergesichert und gleichzeitig axial beabstandet angeordnet sind. Zur Herstellung des Käfigs eignet sich insbesondere ein Tiefziehverfahren oder ein alternatives spanloses Verfahren, mit dem insbesondere für in großen Stückzahlen benötigte Wälzlagerkäfige hergestellt werden können. Der Käfig ist mit Aussparungen versehen, in denen die Wälzkörper eingesetzt sind. Dabei sind die vorzugsweise durch eine Stanzung eingebrachten Aussparungen durch Stege seitlich begrenzt. Ein sich einstellender Axialabstand zwischen den Stegen auf der zu dem Gelenkaußenteil gerichteten Seite des Käfigs bildet eine Überdeckung zu den Wälzkörpern, d. h. der Axialabstand zwischen den Stegen ist kleiner als der Wälzkörperdurchmesser. Damit ergibt sich eine verliergesicherte Anordnung der Wälzkörper in dem Käfig. Zur Erzielung einer vergrößerten Tragzahl des Wälzlagerelementes ist erfindungsgemäß weiterhin ein vollrolliges Wälzlagerelement einsetzbar, bei dem die Wälzkörper unmittelbar nebeneinander angeordnet sind, wodurch sich die Anzahl der in dem Käfig einzubringenden Wälzkörper vergrößert.

Die konstruktive Ausgestaltung des Käfigs schließt weiterhin Stege ein, die in einer Mittenzone eine Kröpfung aufweisen, welche im eingebauten Zustand in Richtung der Lagerschale ausgerichtet sind und die sich bis über die Wälzkörpermitte erstrecken. Der Axialabstand zwischen den Stegen ist in dem Bereich der Kröpfungen ebenfalls kleiner als der Durchmesser der Wälzkörper, wodurch sich auch in Richtung der Lagerschale eine wirksame Verliersicherung und gleichzeitige Führung der Wälzkörper in dem Käfig einstellt.

Alternativ oder zusätzlich zu der Kröpfung schließt die Erfindung außerdem einen Käfig ein, dessen Käfigboden zumindest eine Sicke oder eine Falz aufweist, die sich über die gesamte Länge des Käfigs erstreckt und dabei die Querwandungen des Käfigs miteinander verbindet. Die Sicke bzw. die Falz ist vorteilhaft zweifach d. h. parallel beabstandet zueinander in dem Käfigboden angeordnet. Dabei kann die Sicke in beiden Richtungen, d. h. sowohl nach innen als auch nach außen zeigend in den Käfigboden angeordnet sein und besitzt außerdem eine versteifende Wirkung des wannenförmig ausgebildeten Käfigs. Die Falz bzw. die Sicke ist gleichfalls mit Aussparungen zur Aufnahme der Wälzkörper versehen, deren Öffnungsmaß kleiner ist als der entsprechende Wälzkörperdurchmesser. Damit gewährleistet auch ein mit einer Sicke versehener Käfig eine Verliersicherung der Wälzkörper.

Als Positioniereinrichtung schließt die Erfindung ein unmittelbar mit dem Wälzlagerelement verbundenes Federmittel ein, dessen Anordnung jeweils eine Stirnseite der Lagerschale des Wälzlagerelementes kraftschlüssig beaufschlagt. Unabhängig von der Richtung der Stellbewegung der Lagerschale bewirkt das Federmittel eine kraftschlüssige Beaufschlagung der Lagerschale, um dieses in Richtung einer Mittenposition zu beaufschlagen. Zur Bildung des Federmittels ist die Querwandung des Käfigs einstückig mit Federarmen versehen, die eine zweifach gestufte Abstützung ermöglichen. Das Federmittel übt damit bei einer geringen Verlagerung von einer Mittenposition ausgehend zunächst eine geringe Kraft aus, welche sich verstärkt, sobald sich die Lagerschale in Richtung der Querwandung verschiebt. Dazu bietet es sich an, die Querwandung mit zwei Federarmen unterschiedlicher Länge auszubilden, die in Richtung der Lagerschale abweichend zueinander abgewinkelt sind. Das freie Ende des längeren Federarms stützt sich dabei unmittelbar an der Stirnseite der Lagerschale ab. Die Wirkung des zweiten Federarms tritt erst dann in Kraft, wenn die Lagerschale einen bestimmten Stellweg überschreitet und es dabei zu einer Anlage beider Federarme kommt.

Die erfindungsgemäße Gestaltung der Federmittel ermöglicht weiterhin die Querwandung mit einem mehrfach abgewinkelten, und/oder geschwungenen Federarm zu versehen. Ein solcher Federarm ist dabei über einen abgerundeten Endbereich an der Stirnseite der Lagerschale abgestützt. Synchron zu einer Stellbewegung der Lagerschale in Richtung der Querwandung wird das Federmittel in Richtung eines starren Anschlages an der Käfigwandung verlagert. Sobald das Federende sich an der Abkantung bzw. dem Anschlag der Querwandung anlegt, stellt sich eine Kraftverstärkung ein.

Vorteilhaft bietet es sich an, als Federmittel weiterhin eine einteilige an der Lagerschale kraftschlüssig und/oder formschlüssig befestigte Torsionsfeder vorzusehen, deren Federenden sich jeweils an der Querwandung des Käfigs abstützen. Eine derartige Torsionsfeder besitzt vorteilhaft eine verbesserte Dauerfestigkeit, was sich vorteilhaft auf die Lebensdauer des Federmittels auswirkt.

### Kurze Beschreibung der Zeichnungen

Aus den Figuren sind Ausführungsbeispiele der Erfindung zu entnehmen, die nachfolgend erläutert werden. Es zeigen:
- Figur 1: ein Verschiebegelenk im eingebauten Zustand;
- Figur 2: in einer Perspektive die Baugruppe Wälzlagerelement als Einzelteil;
- Figur 3: in einer Vorderansicht das Wälzlagerelement;
- Figur 4: die Draufsicht des in Figur 3 abgebildeten Wälzlagerelementes;
- Figur 5: in einer auf die Wälzkörper gerichteten Ansicht das Wälzlagerelement;
- Figur 6: die Vorderansicht des in Figur 5 abgebildeten Wälzlagerelementes;
- Figur 7: die Draufsicht des Wälzlagerelementes gemäß Figur 5;
- Figur 8: ein zu Figur 1 alternativ gestaltetes Verschiebegelenk im eingebauten Zustand;
- Figur 9: in einer Draufsicht ein Wälzlagerelement, welches einen wannenförmig gestalteten Käfig umfasst;
- Figur 10: eine Detailansicht des in Figur 9 abgebildeten wannenförmig gestalteten Käfigs mit einem abweichend ausgebildeten Federmittel;
- Figur 11: ein mit dem Käfig in Verbindung stehendes Federmittel, welches einen mehrfach geschwungenen Federarm umfasst;
- Figur 12: ein Federmittel, bestehend aus einer einteiligen an der Lagerschale befestigten Torsionsfeder;
- Figur 13: in einer Seitenansicht das Federmittel gemäß Figur 12.

### Detaillierte Beschreibung der Zeichnungen

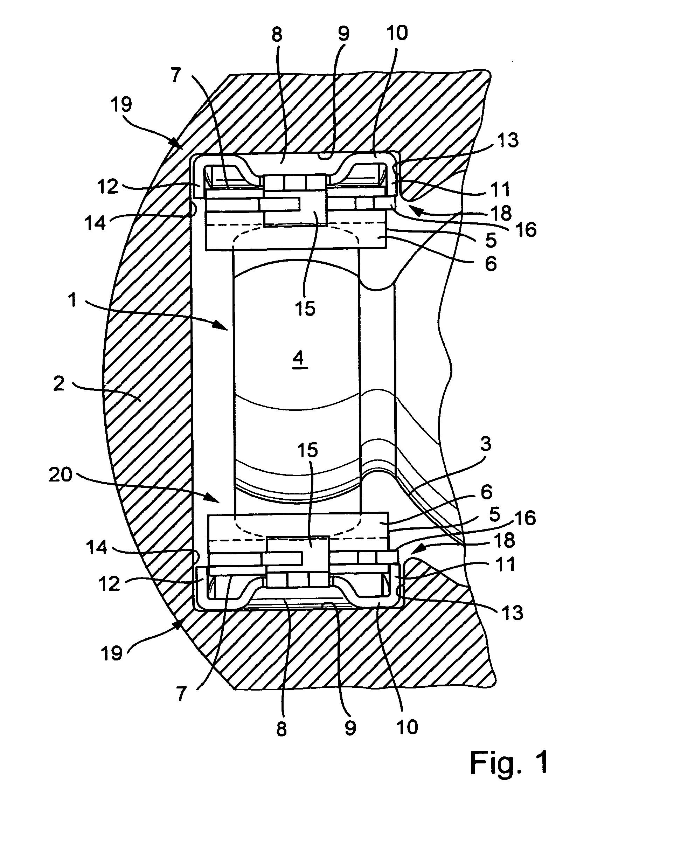

Die Figur 1 zeigt einen Ausschnitt eines Gleichlaufdrehgelenks 1, das ein Gelenkaußenteil 2 umfaßt, in dem eine drehfest mit einer Antriebswelle verbundene Tripode eingebracht ist, die einen Tripodestern 3 umfasst mit drei Zapfen 4, die in drei übereinstimmenden Winkelabständen zueinander angeordnet sind. An der kugelig, konvex gestalteten Außenkontur des Zapfens 4 stützen sich zwei zueinander gegenüberliegend angeordnete Lagerschalen 5 ab, welche eine der Außenkontur der Zapfen 4 entsprechende halbrundartig gestaltete Aufnahme 6 aufweisen. Die Lagerschale 5 stützt sich außenseitig, d. h. an der von dem Zapfen 4 abgewandten Seite über eine Kontaktfläche 7 an Wälzkörpern 8 ab, die in einer Laufbahn 9 des Gelenkaußenteils 2 geführt sind. Die zueinander axial beabstandet angeordneten Wälzkörper 8 sind in einem weitestgehend u-förmig gestalteten Käfig 10 geführt, der seitlich in Längsrichtung verlaufende Borde 11, 12 aufweist, an denen sowohl die Wälzkörper 8 als auch die Lagerschale 5 eine Seitenführung erhält. Die Borde 11, 12 sind an Wandungen 13, 14 des Gelenkaußenteils 2 geführt, die seitlich die Laufbahn 9 begrenzen.

An beiden Stirnseiten ist der Käfig 10 mit einem Längsanschlag 15 versehen, der einen Endanschlag für die Lagerschale 5 bildet und an dem weiterhin ein Federmittel 16, ausgebildet als eine Druckfeder oder eine Zugfeder, mit einem Federende 17 befestigt ist. Das Federmittel 16 ist weiterhin an der Lagerschale 5 abgestützt bzw. befestigt. Das Federmittel 16 übt die Funktion einer Positioniereinrichtung 18 aus, mit der ein selbsttätiges Nachführen der Wälzkörper 8 gegenüber der Lagerschale 5 erfolgt, sobald der Zapfen 4 eine Längsbewegung in dem Gelenkaußenteil 2 ausübt. Die Bauteile Wälzkörper 8, Käfig 10, Lagerschale 5 sowie die Positioniereinrichtung 18 bilden gemeinsam ein Wälzlagerelement 19, das vorzugsweise zu einer Baugruppe verliergesichert zusammengefasst ist, beispielsweise durch eine entsprechende Formgebung des Käfigs 10 und/oder des Federmittels 16. Das Wälzlagerelement 19 in Verbindung mit dem Zapfen 4 bildet das Verschiebegelenk 20.

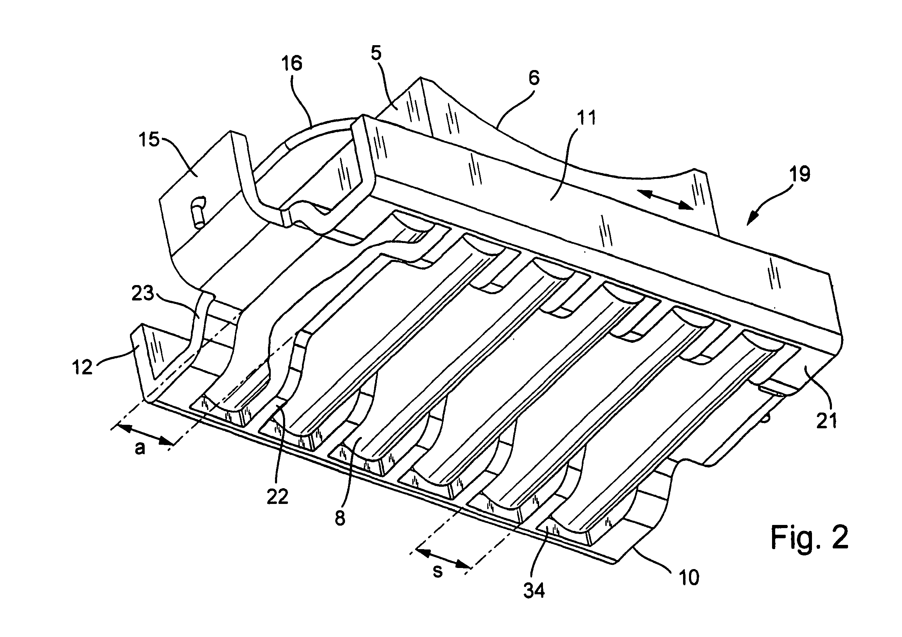

Die Figur 2 zeigt in einer Perspektive das Wälzlagerelement 19. Diese Darstellung zeigt Aussparungen 34 in einem Boden 21 des Käfigs 10, zur Aufnahme der Wälzkörper 8. Zur Erzielung einer axial beabstandeten Anordnung der Wälzkörper 8 sind die Aussparungen 34 durch Stege 22 getrennt. Der axiale Abstand "s" zwischen den Stegen 22 unterschreitet dabei geringfügig den Durchmesser der nadelförmig gestalteten Wälzkörper 8, wodurch diese verliergesichert im Käfig 10 gehalten sind. Die elastische Ausbildung der Stege 22 ermöglicht eine Montage der Wälzkörper 8 in die Aussparungen 34. In einer Mittenzone bildet jeder Steg 22 eine Kröpfung 23, die sich vom Boden 21 abgewandt bis über die Mitte der Wälzkörper 8 erstreckt. In dem gekröpften Bereich ergibt sich dabei ein Axialabstand "a" zwischen den Stegen 22, der ebenfalls das Durchmessermaß der Wälzkörper 8 unterschreitet und damit eine Lagesicherung der Wälzkörper 8 bewirkt. Die verschiebbar, verdeutlicht durch den Doppelpfeil, zu dem Käfig 10 bzw. den Wälzkörpern 8 angeordnete Lagerschale 5 ist seitlich durch die Borde 11, 12 geführt. Zur Erzielung einer Mittenposition dient die Positioniereinrichtung 18, ausgebildet als Federmittel 16, die zwischen dem Längsanschlag 15 und der Lagerschale 5 dargestellt ist, wobei das Federmittel 16 gegenseitig mit dem weiteren Längsanschlag 15 zusammenwirkt, das in Figur 2 nicht abgebildet ist.

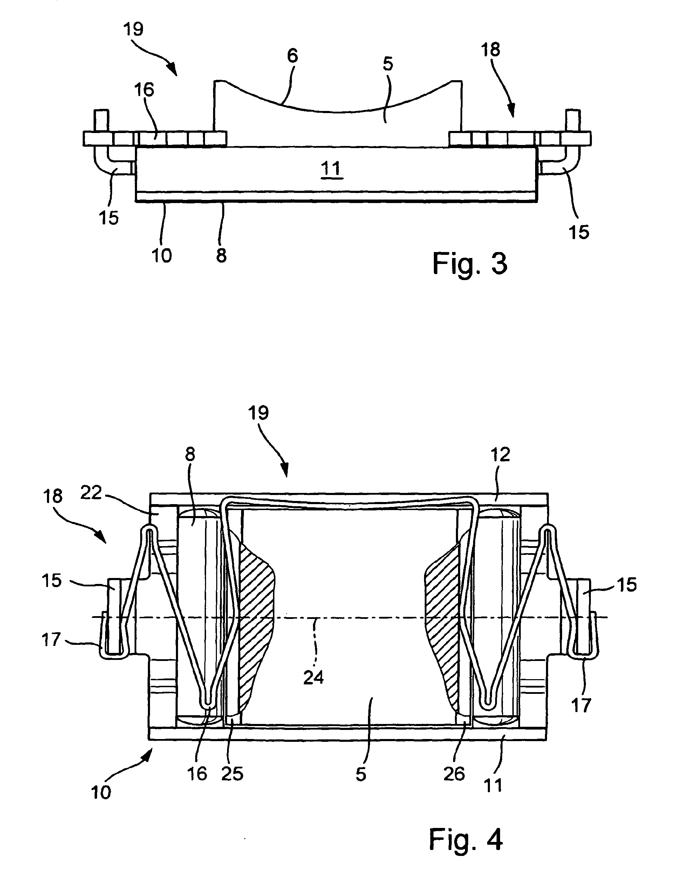

Die Figuren 3 bis 7 zeigen das Wälzlagerelement 19 in verschiedenen Ansichten, wobei einzelne Bauteile bzw. Details abweichen von den Figuren 1 und 2. Bauteile, die mit den Darstellungen gemäß den Figuren 1 und 2 übereinstimmen, sind mit gleichen Bezugsziffern versehen, so dass zu deren Beschreibung auf diese Figuren verwiesen werden kann.

Die Figuren 3 und 4 zeigen das Wälzlagerelement 19 mit einem einteilig gestalteten Federmittel 16. Dieses umgreift dreiseitig die Lagerschale 5 und ist dabei quer zu einer Längsachse in Längsnuten 25, 26 der Lagerschale 5 geführt. Das Federmittel 16 bildet u-förmig geformte Federenden 17, die kraftschlüssig an den Längsanschlägen 15 des Käfigs 10 befestigt sind.

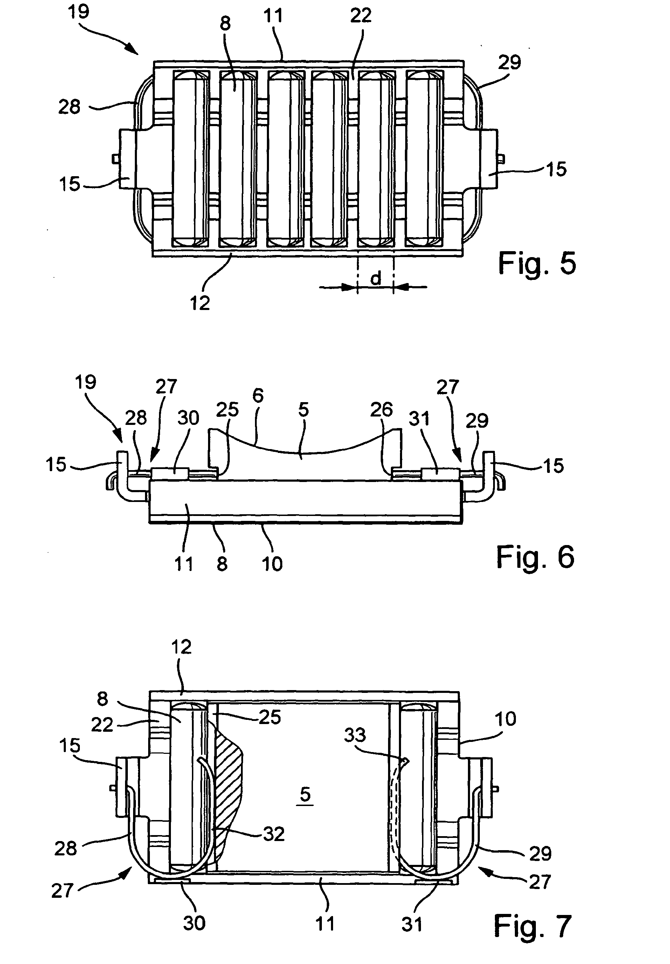

Die Figuren 5 bis 7 zeigen die Wälzlagereinheit 19 mit einer Positioniereinrichtung 27, die zwei getrennte Federmittel 28, 29 umfasst, die jeweils zwischen dem Längsanschlag 15 des Käfigs 10 und der Lagerschale 5 angeordnet sind. Eine spielfreie Anordnung der aus einem Federdraht gebildeten Federmittel 28, 29 wird erzielt, indem die Federmittel 28, 29 mit einem Schenkel 32, 33 in den Längsnuten 25, 26 der Lagerschale 5 geführt sind. Zur Schaffung einer Seitenführung für die Federmittel 28, 29 ist der Bord 11 des Käfigs 10 örtlich mit radial ausgerichteten Anschlägen 30, 31 versehen, die eine Verlagerung des Federmittels 28, 29 über die Außenkontur des Käfigs 10 bzw. des Bordes 11 verhindern.

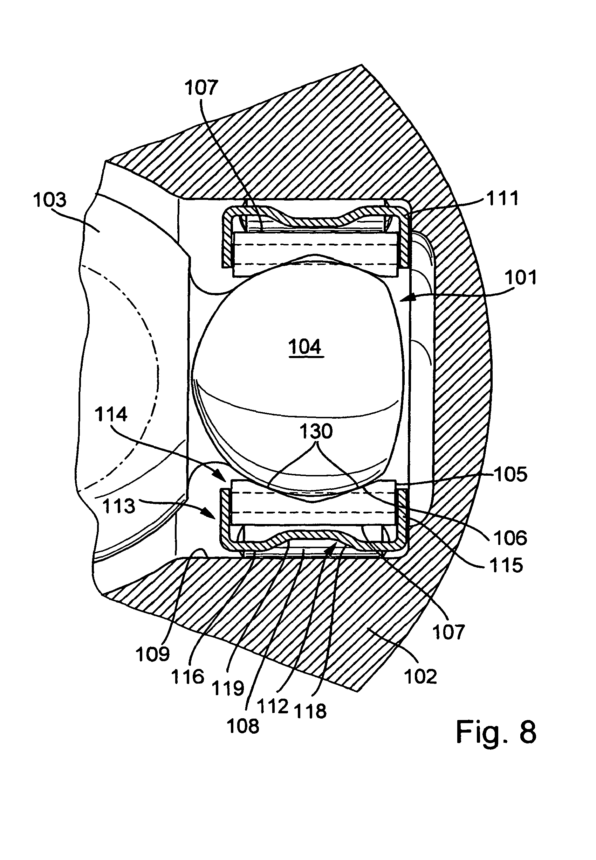

Die Figur 8 zeigt das Gleitlaufdrehgelenk 101, bestehend aus dem Gelenkaußenteil 102, in dem eine drehfest mit einer Antriebwelle verbundene Tripode eingesetzt ist, deren Tripodestern 103 drei symmetrisch zueinander angeordnete Zapfen 104 umfasst. Die kugelig, konvex gestaltete Außenkontur des Zapfens 104 greift formschlüssig in eine Aufnahme 106 der Lagerschale 105 ein, wobei diese Bauteile über eine Kontaktfläche 130 abgestützt sind. Außenseitig über eine Kontaktfläche 107 ist die Lagerschale 105 an Wälzkörpern 108 abgestützt, die an einer Laufbahn 109 des Gelenkaußenteils 102 geführt sind. Die Laufbahn 109 ist außenseitig von einer Wandung 111 begrenzt und innenseitig in Richtung des Tripodesterns 103 zeigend stufenlos gestaltet. Damit kann das Wälzlagerelement 113 allen Stellbewegungen des Tripodesterns 103 folgen. Das Wälzlagerelement 113 umfasst den Käfig 112, in dem die Wälzkörper 108 geführt sind und gleichzeitig an den Längswandungen 115 die Lagerschale 105. Dem Zapfen 104 sind jeweils zwei Wälzlagerelemente 113 zugeordnet, wobei das Wälzlagerelement 113 in Verbindung mit dem Zapfen 104 ein Verschiebegelenkt 114 bildet, das geräuscharm und reibungsoptimiert an der Laufbahn 109 linear verschiebbar ist. Das Wälzlagerelement 113 ermöglicht damit unabhängig von dem Beugewinkel der Antriebswelle bzw. einem Stellbereich des Tripodesterns 103 einen ungehinderten Antrieb.

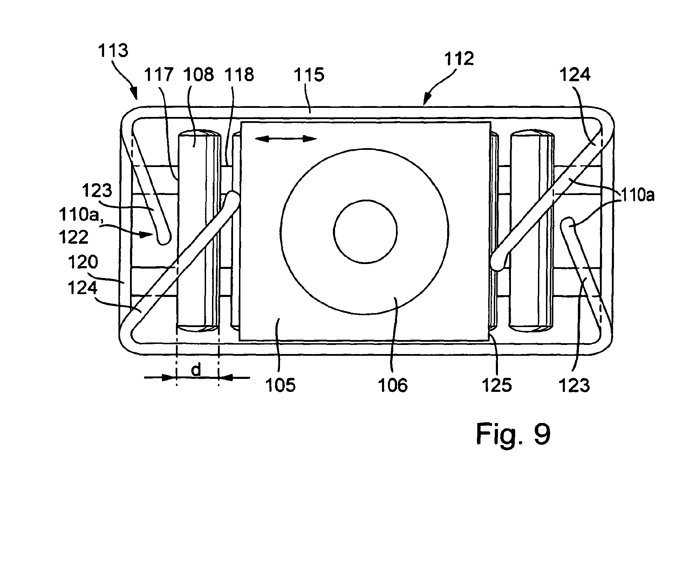

Der wannenförmig gestaltete Käfig 112 bildet weiterhin einen Käfigboden 116, in dem Aussparungen 117 eingebracht sind, zur Aufnahme der Wälzkörper 108. Die jeweils durch Stege 118 getrennten Aussparungen 117 bilden in einer Mittenzone des Käfigbodens 116 eine Kröpfung 119, die sich in Richtung der Lagerschale 105 bis über die Mitte der Wälzkörper 108 erstreckt. In dem gekröpften Bereich stellt sich ein Axialabstand zwischen den Stegen 118 ein, der wie in Figur 9 ersichtlich, dass Durchmessermaß der Wälzkörper 108 unterschreitet und folglich eine Lagesicherung der Wälzkörper 8 bewirkt.

Wie die Figur 9 zeigt, ist die verschiebbar angeordnete Lagerschale 105, verdeutlicht durch den Doppelpfeil, an den Längswandungen 115 spielbehaftet geführt. Zur Erzielung einer Mittenposition der Lagerschale 105 ist das Wälzlagerelement 113 mit einer Positioniereinrichtung 122 beidseitig der Lagerschale 105 versehen. Als Positioniereinrichtung 122 dient ein Federmittel 110a, welches die Federarme 123, 124 umfasst. Die einstückig mit der Querwandung des Käfigs 112 verbundenen Federarme 123, 124 sind übereinstimmend in Richtung der Lagerschale 105 nach innen, schräg geneigt. Der längere Federarm 124 stützt sich dabei kraftschlüssig an der Stirnseite 125 der Lagerschale 105 ab. Bei einer Verschiebung der Lagerschale 105 in Richtung einer Querwandung 120 übt zunächst der Federarm 124 allein eine Gegenkraft auf die Lagerschale 105 ein. Sobald der Federarm 124 mit dem Federarm 123 in Kontakt tritt, verstärkt sich die auf die Lagerschale 105 entgegenwirkende Kraft der Positioniereinrichtung 122.

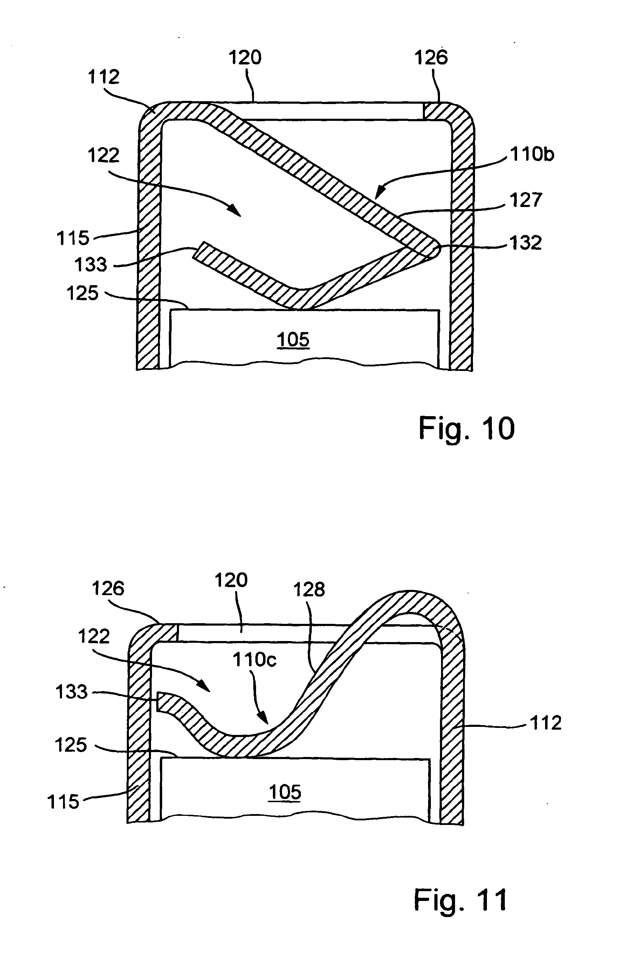

Die Figuren 10 bis 13 stellen weitere alternativ gestaltete Positioniereinrichtungen 122 dar. In Figur 10 ist die Querwandung 120 des Käfigs 112 mit einem mehrfach gewundenen Federarm 127 versehen, welcher mit einem gerundeten Endbereich an der Stirnseite 125 der Lagerschale 105 abgestützt ist. Dieser Aufbau zeigt eine dreistufige Positioniereinrichtung 122. Ausgehend von der ersten Stufe stellt sich eine zweite Stufe ein, sobald eine Zwischenzone 132 sich an die Abkantung 126 verlagert. Eine weitere Kraftverstärkung ergibt sich, sobald das freie Ende 133 die Innenseite der Querwandung 120 erreicht.

In Figur 11 ist die Längswandung 115 des Käfigs 112 mit einem S-förmig gestalteten Federarm 128 versehen, welcher mit einem gekrümmten dem Federende 133 vorgelagerten Abschnitt an der Stirnseite 125 der Lagerschale 105 anliegt. Das Federmittel 110c übt eine verstärkte Gegenkraft auf die Lagerschale 105 aus, sobald das Federende 133 an der Innenseite der Querwandung 120 anliegt.

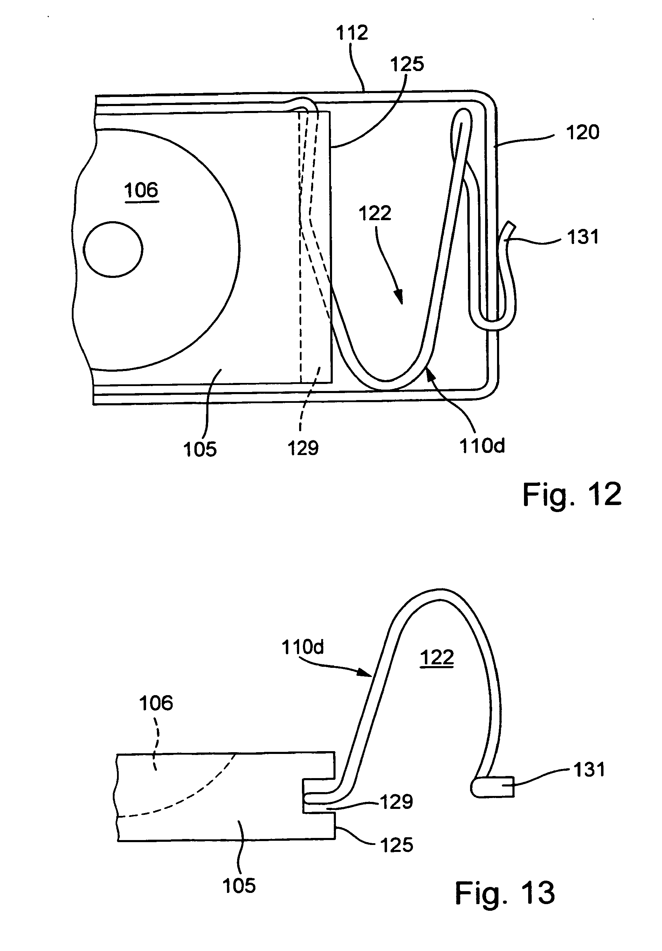

Das Federmittel 110d gemäß Figur 12 umfasst eine einteilige als Torsionsfeder gestaltete Feder, deren Federenden 131 jeweils an den Querwandungen 120 des Käfigs 112 befestigt sind. Das teilweise in einer Quernut 129 der Lagerschale 105 eingepasste und lagefixierte Federmittel 110d bildet wie in Figur 13 dargestellt, einen weit ausladenden Bogen. Diese konstruktive Gestaltung hat eine positive Wirkung auf die Beanspruchung des Federmittels 110d bei auftretenden Stellbewegungen der Lagerschale 5, welche einer Torsionsfeder entsprechen.

### Bezugszahlen

- 1: Gleichlaufdrehgelenk
- 2: Gelenkaußenteil
- 3: Tripodestern
- 4: Zapfen
- 5: Lagerschale
- 6: Aufnahme
- 7: Kontaktfläche
- 8: Wälzkörper
- 9: Laufbahn
- 10: Käfig
- 11: Bord
- 12: Bord
- 13: Wandung
- 14: Wandung
- 15: Längsanschlag
- 16: Federmittel
- 17: Federende
- 18: Positioniereinrichtung
- 19: Wälzlagerelement
- 20: Verschiebegelenk
- 21: Boden
- 22: Steg
- 23: Kröpfung
- 24: Längsachse
- 25: Längsnut
- 26: Längsnut
- 27: Positioniereinrichtung
- 28: Federmittel
- 29: Federmittel
- 30: Anschlag
- 31: Anschlag
- 32: Schenkel
- 33: Schenkel
- 34: Aussparung
- "a": Axialabstand zwischen den Stegen 22 im Bereich der Kröpfung 23
- "d": Durchmesser der Wälzkörper 8
- "s": Axialabstand zwischen den Stegen 22 im Bereich des Bodens 21
- 101: Gleichlaufdrehgelenk
- 102: Gelenkaußenteil
- 103: Tripodestern
- 104: Zapfen
- 105: Lagerschale
- 106: Aufnahme
- 107: Kontaktfläche
- 108: Wälzkörper
- 109: Laufbahn
- 110a: Federmittel
- 110b: Federmittel
- 110c: Federmittel
- 110d: Federmittel
- 111: Wandung
- 112: Käfig
- 113: Wälzlagerelement
- 114: Verschiebegelenk
- 115: Längswandung
- 116: Käfigboden
- 117: Aussparung
- 118: Steg
- 119: Kröpfung
- 120: Querwandung
- 121: Sicke
- 122: Positioniereinrichtung
- 123: Federarm
- 124: Federarm
- 125: Stirnseite
- 126: Abkantung
- 127: Federarm
- 128: Federarm
- 129: Quemut
- 130: Kontaktfläche
- 131: Federende
- 132: Zwischenzone
- 133: Federende

## Patentansprüche

1. Verschiebegelenk, vorgesehen als ein Gelenklager, insbesondere für ein Gleichlaufdrehgelenk (1), versehen mit einem Wälzlagerelement (19), eingesetzt in einem Gelenkaußenteil (2), mit einer drehfest an einer Antriebswelle verbundenen Tripode, deren Tripodestern (3) symmetrisch umfangsverteilt angeordnete Zapfen (4) aufweist, die über zwei auf Laufbahnen (9) in Ausnehmungen des Gelenkaußenteils (2) geführte Wälzlagerelemente (19) verschiebbar sind, wobei das Wälzlagerelement (19) eine an dem kugelig gestalteten Zapfen (4) des Tripodesterns (3) geführte Lagerschale (5) umfasst, sowie zwischen der Laufbahn (9) des Gelenkaußenteils (2) und einer Kontaktfläche (7) der Lagerschale (5) angeordnete Wälzkörper (8), die spielbehaftet in einem Käfig (10) eingesetzt sind, der an die Laufbahn (9) seitlich begrenzenden Wandungen (13, 14) geführt ist, und zur Erzielung einer Mittenposition der Wälzkörper (8) gegenüber der Lagerschale (5) eine Positioniereinrichtung (18, 27) zwischen der Lagerschale (5) und dem Käfig (10) vorgesehen ist, **dadurch gekennzeichnet, dass** der Käfig (10) an seitlich begrenzenden Wandungen (13, 14) der Laufbahn (9) geführt ist und parallel zu den Wandungen (13, 14) ausgerichtete Borde (11, 12) aufweist, die sowohl für die axial spielbehafteten Wälzkörper (8) als auch für die axial spielbehaftete Lagerschale (5) einen Axialanschlag bilden.

2. Verschiebegelenk (114) bestimmt für ein Gleichlaufdrehgelenk, versehen mit einem Wälzlagerelement (113), eingesetzt in einem Gelenkau-ßenteil (112) mit einer drehfest an einer Antriebswelle verbundenen Tripode, deren Tripodestern (103) symmetrisch verteilte Zapfen (104) umfasst, die über verschiebbare Wälzlagerelemente (113) an parallel zueinander verlaufenden Laufbahnen (109) des Gelenkaußenteils (102) geführt sind, das Wälzlagerelement (103) umfasst eine an dem kugelig gestalteten Zapfen (104) des Tripodesterns (103) geführte Lagerschale (105) sowie eine kalottenartig ausgebildete Aufnahme (106) für den Zapfen (104) sowie Wälzkörper (108), die zwischen der Laufbahn (109) des Gelenkaußenteils (102) und einer Außenseite (107) der Lagerschale (105) angeordnet sind und einen spanles hergestellten Käfig (112), der für die Wälzkörper (108) und die Lagerschale (105) bestimmt ist sowie eine Positioniereinrichtung (122) für die Lagerschale (105) **dadurch gekennzeichnet, dass** der in einer Wannenform gestaltete Käfig (112) an einer die Laufbahn (109) begrenzenden Wandung (111) geführt ist und der Käfig (112) an seinen beiden Seiten parallel zu der Wandung (111) des Gelenkaußenteils (102) ausgerichtete Längswandungen (115) aufweist, die sowohl für die axial spielbehafteten Wälzkörper (108) als auch für die axial spielbehaftete Lagerschale (105) einen Axialanschlag bilden.

3. Verschiebegelenk nach Anspruch 1, wobei der Käfig (10) die Wälzkörper (8); die Lagerschale (5) und die Positioniereinrichtung (18, 27) des Wälzlagerelementes (19) verliergesichert, zur Bildung einer Baugruppe, zusammenfasst sind.

4. Verschiebegelenk nach Anspruch 1, wobei die Lagerschale (5) eine quer, rechtwinklig zu einer Längsachse (24) verlaufende, der Formgebung des Zapfens (4) angepasste Aufnahme (6) bildet, die eine Relativbewegung des Zapfens (4) zu der Lagerschale (5) entlang der Aufnahme (6) ermöglicht.

5. Verschiebegelenk nach Anspruch 1, mit einem spanlos hergestellten Käfig (10), der beidseitig außen parallel zu der Längsachse verlaufende Borde (11, 12) aufweist, an denen in verschiedenen Ebenen die Lagerschale (5) und die Wälzkörper (8) geführt sind.

6. Verschiebegelenk nach Anspruch 5, wobei der spanlos aus einem Blechteil hergestellte, nahezu u-förmig gestaltete Käfig (10), mit Aussparungen (34) für die Wälzkörper (8) versehen ist, wobei die Aussparungen (34) jeweils seitlich durch einen Steg (22) getrennt sind.

7. Verschiebegelenk nach Anspruch 6, wobei die Stege (22) so angeordnet sind, dass ein axialer Abstand "s" zwischen den Stegen (22) kleiner ist als ein Durchmesser "d" der Wälzkörper (8) und der axiale Abstand "s" eine Überdeckung zu den Wälzkörpern (8) sicherstellt.

8. Verschiebegelenk nach Anspruch 6, wobei die Stege (22) des Käfigs (10) in einer Mittenzone eine in einer Einbaulage zu der Lagerschale (5) ausgerichte Kröpfung (23) aufweisen, die sich bis über eine Mitte der Wälzkörper (8) erstreckt, wobei sich in dem gekröpften Bereich zwischen den Stegen (22) ein Axialabstand "a" einstellt, der kleiner ist als der Durchmesser "d" der Wälzkörper (8).

9. Verschiebegelenk nach Anspruch 5, wobei der die Wälzkörper (8) führende Käfig (10) an beiden Stirnseiten einen Längsanschlag (15) aufweist, die rechtwinklig zu den längsseitig ausgerichteten Borden (11, 12) angeordnet sind.

10. Verschiebegelenk nach Anspruch 1, dessen Lagerschale (5) über eine rechtwinklig oder quadratisch gestaltete Kontaktfläche (7) an den Wälzkörpern (8) abgestützt ist und die Lagerschale (5) weiterhin an der von der Kontaktfläche (7) abgewandten Seite mit einer halbrundartig gestalteten, übereinstimmend mit einer Längsachse der Wälzkörper (8) verlaufenden Aufnahme (6) an dem sphärisch gestalteten Zapfen (4) des Tripodesterns (3) abgestützt ist.

11. Verschiebegelenk nach Anspruch 1, mit einer Positioniereinrichtung (18, 27), die mit einem einteilig oder zweiteilig gestalteten Federmittel (16, 28, 29) kraftschlüssig und/oder formschlüssig zwischen dem Käfig (10) und der Lagerschale (5) angeordnet ist.

12. Verschiebegelenk nach Anspruch 11, wobei das Federmittel (16, 28, 29) über Federenden (17) an den Längsanschlägen (15) des Käfigs (10) befestigt ist.

13. Verschiebegelenk nach Anspruch 11, wobei das Federmittel (16, 28, 29) an einer Längsnut (25, 26) der Lagerschale (5) geführt ist.

14. Verschiebegelenk nach Anspruch 1, mit einer Positioniereinrichtung (27), deren Federmittel (28, 29) an einstückig mit dem Bord (11) des Käfigs (10) verbundenen Anschlägen (30, 31) geführt sind.

15. Verschiebegelenk nach Anspruch 11, mit einem als Zugfeder gestalteten Federmittel (16, 28, 29), das zwischen der Lagerschale (5) und dem Käfig (10) eingesetzt ist.

16. Verschiebegelenk nach Anspruch 11, mit einem als Druckfeder gestalteten Federmittel (16, 28, 29), welches zwischen der Lagerschale (5) und dem Käfig (10) angeordnet ist.

17. Verschiebegelenk nach Anspruch 1 oder nach Anspruch 2, mit einer als Fliesspressteil gestalteten Lagerschale (5, 105).

18. Verschiebegelenk nach Anspruch 2, wobei der Zapfen (104) des Tripodesterns (103) über eine kreisringförmige Kontaktfläche (130) in der Lagerschale (105) des Wälzlagerelementes (113) abgestützt ist.

19. Verschiebegelenk nach Anspruch 2, wobei das Wälzlagerelement (113) an einer Laufbahn (109) des Gelenkaußenteils (102) geführt ist, die außenseitig axial von einer Wandung (111) begrenzt ist und innenseitig in Richtung einer Tripodesternmitte zeigend, stufenlos ausgebildet ist.

20. Verschiebegelenk nach Anspruch 2, wobei die Wälzkörper (108), der Käfig (112), die Lagerschale (105) und die Positioniereinrichtung (122) zu einer Baugruppe zusammengefügt sind.

21. Verschiebegelenk nach Anspruch 2, wobei die Lagerschale (105) über eine rechtwinklig oder quadratisch gestaltete Kontaktfläche (107) an den Wälzkörpern (108) abgestützt ist und die Lagerschale (105) von der Kontaktfläche (107) ausgehend, sich allseitig verjüngt, zur Bildung eines Kegelstumpfs oder eines Pyramidenstumpfs, der abgewandt zur Kontaktfläche (107), eine kalottenartige Aufnahme (106) für den Zapfen (104) aufweist.

22. Verschiebegelenk nach Anspruch 2, wobei die Wälzkörper (108) des Wälzlagerelementes (113) axial beabstandet in dem Käfig (112) eingesetzt sind und der durch ein Tiefziehverfahren hergestellte Käfig (112) einen Käfigboden (116) bildet, der jeweils durch einen Steg (118) getrennte Aussparungen (117) zur Aufnahme der Wälzkörper (108) aufweist.

23. Verschiebegelenk nach Anspruch 22, wobei die Stege (118) des Käfigs (112) in einer Mittenzone eine Kröpfung (119) aufweisen, die in der Einbaulage des Käfigs (112) zu der Lagerschale (105) ausgerichtet sind und die sich bis über die Mitte der Wälzkörper (108) erstrecken, wobei in dem gekröpften Abschnitt zwischen den Stegen (118) sich ein Axialabstand einstellt, der kleiner ist als der Durchmesser "d" der Wälzkörper (108).

24. Verschiebegelenk nach Anspruch 22, wobei der Käfigboden (116) zumindest eine sich über die gesamte Länge des Käfigs (112) erstreckende Sicke (121) aufweist, die mit Aussparungen (117) für die Wälzkörper (108) versehen ist.

25. Verschiebegelenk nach Anspruch 2, wobei die Positioniereinrichtung (122) des Wälzlagerelementes (113) Federmittel (110a, 110b, 110c, 110d) umfasst, die jeweils eine Stirnseite der Lagerschale (105) kraftschlüssig beaufschlagt, unabhängig von der Richtung einer Stellbewegung der Lagerschale (105).

26. Verschiebegelenk nach Anspruch 25, wobei das zumindest einen Federarm umfassende Federmittel (110a bis 110d) zumindest eine zweifach gestufte kraftschlüssige Abstützung der Lagerschale (105) bewirkt.

27. Verschiebegelenk nach Anspruch 25, wobei zur Bildung des Federmittels (110a) die Querwandung (120) des Käfigs (112) Federarme (123, 124) unterschiedlicher Länge aufweist, wobei in einer Neutrallage der längere Federarm (124) an der Lagerschale (105) abgestützt ist und der weitere Federarm (123) bei einer Verlagerung der Lagerschale (105) wirksam wird.

28. Verschiebegelenk nach Anspruch 25, wobei die Querwandung (120) des Käfigs (112) einen mehrfach abgewinkelten und/oder geschwungenen Federarm (127, 128) aufweist, der mit einem Endbereich an der Stirnseite (125) der Lagerschale (105) abgestützt ist und der nach einer definierten Stellbewegung der Lagerschale (105) an einer starren Abkantung (126) oder Anschlag des Käfigs (112) anliegt.

29. Verschiebegelenk nach Anspruch 25, wobei als Federmittel (110d) eine einteilige an der Lagerschale (105) kraftschlüssig und/oder formschlüssig befestigte Torsionsfeder vorgesehen ist, deren Federenden (131) sich jeweils an der Querwandung (120) des Käfigs (112) abstützt.

## Claims

1. Plunge joint, provided as a joint bearing, in particular for a constant velocity joint (1), provided with a rolling bearing element (19), inserted into a joint outer part (2), having a tripod which is connected to a drive shaft in a rotationally fixed manner and whose tripod spider (3) has trunnions (4) which are arranged in a symmetrically distributed manner at the circumference and which can be displaced via two rolling bearing elements (19) guided on raceways (9) in recesses of the joint outer part (2), the rolling bearing element (19) comprising a bearing shell (5), guided on the spherically designed trunnion (4) of the tripod spider (3), and also rolling bodies (8) which are arranged between the raceway (9) of the joint outer part (2) and a contact surface (7) of the bearing shell (5) and are inserted with play in a cage (10) which is guided on walls (13, 14) laterally defining the raceway (9), and a positioning device (18, 27) being provided between the bearing shell (5) and the cage (10) in order to achieve a centre position of the rolling bodies (8) relative to the bearing shell (5), **characterized in that** the cage (10) is guided on laterally defining walls (13, 14) of the raceway (9) and has flanges (11, 12) which are oriented parallel to the walls (13, 14) and form an axial stop both for the rolling bodies (8) having axial play and for the bearing shell (5) having axial play.

2. Plunge joint (114) intended for a constant velocity joint, provided with a rolling bearing element (113), inserted into a joint outer part (112), having a tripod which is connected to a drive shaft in a rotationally fixed manner and whose tripod spider (103) has symmetrically distributed trunnions (4) which are guided via displaceable rolling bearing elements (113) on raceways (109), running parallel to one another, of the joint outer part (102), the rolling bearing element (113) comprises a bearing shell (105), guided on the spherically designed trunnion (104) of the tripod spider (103), and a receptacle (106) designed like a spherical indentation for the trunnion (104) and also rolling bodies (108) which are arranged between the raceway (109) of the joint outer part (102) and an outer side (107) of the bearing shell (105), and a cage (112), which is produced by non-cutting shaping and is intended for the rolling bodies (108) and the bearing shell (105), and also a positioning device (122) for the bearing shell (105), **characterized in that** the cage (112) of tub-shaped design is guided on a wall (111) defining the raceway (109), and the cage (112) has, on its two sides, longitudinal walls (115) which are oriented parallel to the wall (111) of the joint outer part (102) and which form an axial stop both for the rolling bodies (108) having axial play and for the bearing shell (105) having axial play.

3. Plunge joint according to Claim 1, the cage (10), the rolling bodies (8), the bearing shell (5) and the positioning device (18, 27) of the rolling bearing element (19) being combined in a captively secured manner to form a subassembly.

4. Plunge joint according to Claim 1, the bearing shell (5) forming a receptacle (6) which runs at right angles to a longitudinal axis (24), is adapted to the shaping of the trunnion (4) and permits a relative movement of the trunnion (4) with respect to the bearing shell (5) along the receptacle (6).

5. Plunge joint according to Claim 1, having a cage (10) which is produced by non-cutting shaping and has, on both sides, on the outside, flanges (11, 12) which run parallel to the longitudinal axis and on which the bearing shell (5) and the rolling bodies (8) are guided in different planes.

6. Plunge joint according to Claim 5, the cage (10) produced from a sheet-metal part by non-cutting shaping and formed almost in a U shape is provided with apertures (34) for the rolling bodies (8), the apertures (34) in each case being separated laterally by a web (22).

7. Plunge joint according to Claim 6, the webs (22) being arranged in such a way that an axial distance "s" between the webs (22) is smaller than a diameter "d" of the rolling bodies (8) and the axial distance "s" ensures an overlap relative to the rolling bodies (8).

8. Plunge joint according to Claim 6, the webs (22) of the cage (10) having, in a centre zone, an offset (23) which is oriented relative to the bearing shell (5) in a fitted position and extends across a centre of the rolling bodies (8), an axial distance "a" which is smaller than the diameter "d" of the rolling bodies (8) being produced in the offset region between the webs (22).

9. Plunge joint according to Claim 5, the cage (10) which guides the rolling bodies (8) having a longitudinal stop (15) at both end faces, these longitudinal stops (15) being arranged at right angles to the flanges (11, 12) oriented lengthways.

10. Plunge joint according to Claim 1, the bearing shell (5) of which is supported on the rolling bodies (8) via a contact surface (7) of right-angled or square design, and the bearing shell (5), furthermore, on the side facing away from the contact surface (7), is supported on the spherically designed trunnion (4) of the tripod spider (3) by means of a receptacle (6) of half-round-like design which runs in accordance with a longitudinal axis of the rolling bodies (8).

11. Plunge joint according to Claim 1, having a positioning device (18, 27) which is arranged in a frictional and/or positive-locking manner between the cage (10) and the bearing shell (5) by a spring means (16, 28, 29) of one-piece or two-piece design.

12. Plunge joint according to Claim 11, the spring means (16, 28, 29) being fastened to the longitudinal stops (15) of the cage (10) via spring ends (17).

13. Plunge joint according to Claim 11, the spring means (16, 28, 29) being guided on a longitudinal groove (25, 26) of the bearing shell (5).

14. Plunge joint according to Claim 1, having a positioning device (27) whose spring means (28, 29) are guided on stops (30, 31) connected in one piece to the flange (11) of the cage (10).

15. Plunge joint according to Claim 11, having a spring means (16, 28, 29) which is designed as a tension spring and is inserted between the bearing shell (5) and the cage (10).

16. Plunge joint according to Claim 11, having a spring means (16, 28, 29) which is designed as a compression spring and is arranged between the bearing shell (5) and the cage (10).

17. Plunge joint according to Claim 1 or according to Claim 2, having a bearing shell (5, 105) designed as an extruded part.

18. Plunge joint according to Claim 2, the trunnion (104) of the tripod spider (103) being supported in the bearing shell (105) of the rolling bearing element (113) via an annular contact surface (130).

19. Plunge joint according to Claim 2, the rolling bearing element (113) being guided on a raceway (109) of the joint outer part (102), this raceway (109) being defined axially on the outside by a wall (111) and being of stepless design on the inside pointing in the direction of a tripod spider centre.

20. Plunge joint according to Claim 2, the rolling bodies (108), the cage (112), the bearing shell (105) and the positioning device (122) being fitted together to form a subassembly.

21. Plunge joint according to Claim 2, the bearing shell (105) being supported on the rolling bodies (108) via a contact surface (107) of right-angled or square design, and the bearing shell (105), starting from the contact surface (107), narrowing on all sides to form a truncated cone or a truncated pyramid which, facing away from the contact surface (107), has a spherical-indentation-like receptacle (106) for the trunnion (104).

22. Plunge joint according to Claim 2, the rolling bodies (108) of the rolling bearing element (113) being inserted at an axial distance apart in the cage (112), and the cage (112), produced by a deep-drawing method, forming a cage base (116) which has apertures (117), in each case separated by a web (118), for accommodating the rolling bodies (108).

23. Plunge joint according to Claim 22, the webs (118) of the cage (112) having an offset (119) in a centre zone, these offsets (119) being oriented relative to the bearing shell (105) in the fitted position of the cage (112) and extending across the centre of the rolling bodies (108), an axial distance which is smaller than the diameter "d" of the rolling bodies (108) being produced in the offset section between the webs (118).

24. Plunge joint according to Claim 22, the cage base (116) having at least one bead (121) which extends over the entire length of the cage (112) and is provided with apertures (117) for the rolling bodies (108).

25. Plunge joint according to Claim 2, the positioning device (122) of the rolling bearing element (113) comprising spring means (110a, 110b, 110c, 110d) which in each case act frictionally on an end face of the bearing shell (105) irrespective of the direction of an adjusting movement of the bearing shell (105).

26. Plunge joint according to Claim 25, the spring means (110a to 110d), which comprises at least one spring arm, producing at least one double-stage frictional support of the bearing shell (105).

27. Plunge joint according to Claim 25, the transverse wall (120) of the cage (112) having spring arms (123, 124) of different length for forming the spring means (110a), the longer spring arm (124) being supported on the bearing shell (105) in a neutral position, and the other spring arm (123) coming into effect during a displacement of the bearing shell (105).

28. Plunge joint according to Claim 25, the transverse wall (120) of the cage (112) having a repeatedly angled and/or curved spring arm (127, 128) which is supported with an end region on the end face (125) of the bearing shell (105) and which bears against a rigid folded edge (126) or stop of the cage (112) after a defined adjusting movement of the bearing shell (105).

29. Plunge joint according to Claim 25, the spring means (110d) provided being a one-piece torsion spring which is fastened to the bearing shell (105) in a frictional and/or positive-locking manner and whose spring ends (131) are each supported on the transverse wall (120) of the cage (112).

## Revendications

1. Joint coulissant prévu comme palier d'articulation, notamment pour un joint homocinétique (1), pourvu d'un élément (19) formant palier à roulement inséré dans une partie extérieure (2) de joint, avec un tripode lié en rotation à un arbre moteur et dont l'étoile de tripode (3) présente des tenons (4) qui sont disposés en étant symétriquement répartis sur la circonférence et sont coulissants via deux éléments (19) formant paliers à roulement qui sont guidés sur des pistes de roulement (9) dans des évidements de la partie extérieure (2) de joint, sachant que l'élément (19) formant palier à roulement comprend une coquille de coussinet (5) guidée sur le tenon (4) de forme sphérique de l'étoile de tripode (3), ainsi que des éléments roulants (8) disposés entre la piste de roulement (9) de la partie extérieure (2) de joint et une surface de contact (7) de la coquille de coussinet (5), lesquels sont insérés avec jeu dans une cage (10) qui est guidée sur des parois (13, 14) délimitant latéralement la piste de roulement (9), et sachant qu'un dispositif de positionnement (18, 27) est prévu entre la coquille de coussinet (5) et la cage (10) pour obtenir une position centrée des éléments roulants (8) par rapport à la coquille de coussinet (5), **caractérisé en ce que** la cage (10) est guidée sur des parois (13, 14) de délimitation latérale de la piste de roulement (9) et présente des collets (11, 12) qui sont orientés parallèlement aux parois (13, 14) et qui constituent une butée axiale tant pour les éléments roulants (8) affectés d'un jeu axial que pour la coquille de coussinet (5) affectée d'un jeu axial.

2. Joint coulissant (114) destiné à un joint homocinétique, pourvu d'un élément (113) formant palier à roulement inséré dans une partie extérieure (112) de joint, avec un tripode qui est lié en rotation à un arbre moteur et dont l'étoile de tripode (103) présente des tenons (104) symétriquement répartis qui sont guidés par l'intermédiaire d'éléments coulissants (113) formant paliers à roulement sur des pistes de roulement (109) de la partie extérieure (102) de joint qui s'étendent parallèlement entre elles, sachant que l'élément (113) formant palier à roulement comprend une coquille de coussinet (105) guidée sur le tenon (104) de forme sphérique de l'étoile de tripode (103), un logement (106) réalisé en forme de calotte pour le tenon (104), des éléments roulants (108) disposés entre la piste de roulement (109) de la partie extérieure (102) de joint et un côté extérieur (107) de la coquille de coussinet (105), une cage (112) réalisée sans enlèvement de matière et destinée aux éléments roulants (108) et à la coquille de coussinet (105), et un dispositif de positionnement (122) pour la coquille de coussinet (105), **caractérisé en ce que** la cage (112) réalisée en forme de cuvette est guidée sur une paroi (111) délimitant la piste de roulement (109), et la cage (112) présente sur ses deux côtés des parois longitudinales (115) orientées parallèlement à la paroi (111) de la partie extérieure (102) de joint, qui constituent une butée axiale tant pour les éléments roulants (108) affectés d'un jeu axial que pour la coquille de coussinet (105) affectée d'un jeu axial.

3. Joint coulissant selon la revendication 1, sachant que la cage (10), les éléments roulants (8), la coquille de coussinet (5) et le dispositif de positionnement (18, 27) de l'élément (19) formant palier à roulement sont regroupés de manière imperdable, pour former un ensemble.

4. Joint coulissant selon la revendication 1, sachant que la coquille de coussinet (5) forme un logement (6) s'étendant transversalement, perpendiculairement à un axe longitudinal (24), adapté à la forme du tenon (4), qui permet un mouvement relatif du tenon (4) par rapport à la coquille de coussinet (5) le long du logement (6).

5. Joint coulissant selon la revendication 1, avec une cage (10) réalisée sans enlèvement de matière qui présente de part et d'autre des collets (11, 12) s'étendant extérieurement parallèlement à l'axe longitudinal, sur lesquels la coquille de coussinet (5) et les éléments roulants (8) sont guidés dans différents plans.

6. Joint coulissant selon la revendication 5, sachant que la cage (10) réalisée sans enlèvement de matière à partir d'une pièce de tôle et configurée pratiquement en forme de U est dotée d'évidements (34) pour les éléments roulants (8), sachant que les évidements (34) sont chacun séparés latéralement par une nervure (22).

7. Joint coulissant selon la revendication 6, sachant que les nervures (22) sont disposées de telle sorte qu'une distance axiale « s » entre les nervures (22) est inférieure à un diamètre « d » des éléments roulants (8) et que la distance axiale « s » assure un recouvrement avec les éléments roulants (8).

8. Joint coulissant selon la revendication 6, sachant que les nervures (22) de la cage (10) présentent dans une zone centrale un contrecoudage (23) qui est dirigé vers la coquille de coussinet (5) en position d'installation et qui s'étend jusqu'au-dessus d'un centre des éléments roulants (8), sachant qu'une distance axiale « a » qui est inférieure au diamètre « d » des éléments roulants (8) se règle entre les nervures (22) dans la région contrecoudée.

9. Joint coulissant selon la revendication 5, sachant que la cage (10) guidant les éléments roulants (8) présente sur les deux côtés frontaux une butée longitudinale (15) qui est disposée perpendiculairement aux collets (11, 12) orientés longitudinalement.

10. Joint coulissant selon la revendication 1, dont la coquille de coussinet (5) est soutenue sur les éléments roulants (8) par l'intermédiaire d'une surface de contact (7) de forme rectangulaire ou carrée, et la coquille de coussinet (5), sur le côté opposé à la surface de contact (7), est en outre soutenue, par un logement (6) de forme semi-circulaire s'étendant en coïncidence avec un axe longitudinal des éléments roulants (8), sur le tenon (4) de forme sphérique de l'étoile de tripode (3).

11. Joint coulissant selon la revendication 1, avec un dispositif de positionnement (18, 27) qui, par un moyen de ressort (16, 28, 29) réalisé en une ou deux parties, est disposé à force et/ou en engagement positif entre la cage (10) et la coquille de coussinet (5).

12. Joint coulissant selon la revendication 11, sachant que le moyen de ressort (16, 28, 29) est fixé via des extrémités de ressort (17) sur les butées longitudinales (15) de la cage (10).

13. Joint coulissant selon la revendication 11, sachant que le moyen de ressort (16, 28, 29) est guidé sur une rainure longitudinale (25, 26) de la coquille de coussinet (5).

14. Joint coulissant selon la revendication 1, avec un dispositif de positionnement (27) dont les moyens de ressort (28, 29) sont guidés sur des butées (30, 31) solidairement reliées au collet (11) de la cage (10).

15. Joint coulissant selon la revendication 11, avec un moyen de ressort (16, 28, 29) réalisé sous forme de ressort de traction, qui est inséré entre la coquille de coussinet (5) et la cage (10).

16. Joint coulissant selon la revendication 11, avec un moyen de ressort (16, 28, 29) réalisé sous forme de ressort de compression, qui est disposé entre la coquille de coussinet (5) et la cage (10).

17. Joint coulissant selon la revendication 1 ou 2, avec une coquille de coussinet (5, 105) réalisée sous forme de pièce fluée.

18. Joint coulissant selon la revendication 2, sachant que le tenon (104) de l'étoile de tripode (103) est soutenu par l'intermédiaire d'une surface de contact (130) en forme de couronne dans la coquille de coussinet (105) de l'élément (113) formant palier à roulement.

19. Joint coulissant selon la revendication 2, sachant que l'élément (113) formant palier à roulement est guidé sur une piste de roulement (109) de la partie extérieure (102) de joint qui, sur le côté extérieur, est délimitée axialement par une paroi (111) et qui, sur le côté intérieur, est réalisée continue en étant dirigée vers un centre de l'étoile de tripode.

20. Joint coulissant selon la revendication 2, sachant que les éléments roulants (108), la cage (112), la coquille de coussinet (105) et le dispositif de positionnement (122) sont regroupés en un ensemble.

21. Joint coulissant selon la revendication 2, sachant que la coquille de coussinet (105) est soutenue sur les éléments roulants (108) par l'intermédiaire d'une surface de contact (107) de forme rectangulaire ou carrée, et la coquille de coussinet (105), en partant de la surface de contact (107), se rétrécit de tous côtés pour former un cône tronqué ou une pyramide tronquée qui présente, à l'opposé de la surface de contact (107), un logement (106) du genre calotte pour le tenon (104).

22. Joint coulissant selon la revendication 2, sachant que les éléments roulants (108) de l'élément (113) formant palier à roulement sont insérés dans la cage (112) en étant axialement distants, et la cage (112) réalisée par un procédé d'emboutissage forme un fond de cage (116) qui présente des évidements (117) respectivement séparés par une nervure (118) et destinés à recevoir les éléments roulants (108).

23. Joint coulissant selon la revendication 22, sachant que les nervures (118) de la cage (112) présentent dans une zone centrale des contrecoudages respectifs (119) qui sont dirigés vers la coquille de coussinet (105) dans la position d'installation de la cage (112) et qui s'étendent jusqu'au-dessus du centre des éléments roulants (108), sachant qu'une distance axiale qui est inférieure au diamètre « d » des éléments roulants (108) se règle entre les nervures (118) dans la région contrecoudée.

24. Joint coulissant selon la revendication 22, sachant que le fond-de cage (116) présente au moins une moulure (121) qui s'étend sur toute la longueur de la cage (112) et qui est pourvue d'évidements (117) pour les éléments roulants (108).

25. Joint coulissant selon la revendication 2, sachant que le dispositif de positionnement (122) de l'élément (113) formant palier à roulement comprend des moyens de ressort (110a, 110b, 110c, 110d) qui sollicitent respectivement à force un côté frontal de la coquille de coussinet (105), indépendamment de la direction d'un mouvement de réglage de la coquille de coussinet (105).

26. Joint coulissant selon la revendication 25, sachant que le moyen de ressort (110a à 110d) comprenant au moins un bras de ressort produit au moins un appui à force à deux échelons de la coquille de coussinet (105).

27. Joint coulissant selon la revendication 25, sachant qu'afin de former le moyen de ressort (110a), la paroi transversale (120) de la cage (112) présente des bras de ressort (123, 124) de longueurs différentes, sachant que dans une position neutre, le bras de ressort plus long (124) est soutenu sur la coquille de coussinet (105) et l'autre bras de ressort (123) devient actif lors d'un déplacement de la coquille de coussinet (105).

28. Joint coulissant selon la revendication 25, sachant que la paroi transversale (120) de la cage (112) présente un bras de ressort (127, 128) plusieurs fois coudé et/ou incurvé, qui est soutenu par une région terminale sur le côté frontal (125) de la coquille de coussinet (105) et qui, au bout d'un mouvement défini de réglage de la coquille de coussinet (105), s'applique contre une butée ou un rebord (126) rigide de la cage (112).

29. Joint coulissant selon la revendication 25, sachant qu'il est prévu comme moyen de ressort (110d) un ressort de torsion d'un seul tenant fixé à force et/ou en engagement positif sur la coquille de coussinet (105) et dont les extrémités de ressort (131) s'appuient respectivement contre la paroi transversale (120) de la cage (112).
